# EUROPEAN PATENT APPLICATION

(11) **EP 2 604 533 A1**
(43) Date of publication of application: **19.06.2013**
(21) Application number: 12196686.5
(22) Date of filing: 12.12.2012
(51) Int. Cl.: B65B 11/02, B65H 23/06

(54) **Device for recovering energy**

(30) Priority: 14.12.2011 IT BO20110711
(71) Applicant: Atlanta Stretch S.p.A., 47824 Poggio Berni (RN) (IT)
(72) Inventor: Bruni, Valeriano, 47824 Poggio Berni RN (IT); Paci, Luca, 47824 Poggio Berni RN (IT)
(74) Representative: Manzella & Associati

(57) **Abstract**

The device (1) for recovering energy comprises a coil (2) of film or strip material, supported rotatable on a substantially vertical axis (A), means (3, 5) for guiding the material (6) unwinding from said coil (2), freely rotatable on axes (B, D) parallel to said rotation axis (A) of said coil (2), actuation means (4) rotatable on an axis (C) parallel to said rotation axis (A) of the coil (2), which can be operated for being driven in rotation by friction of the material (6) being unwound from said coil (2). Energy conversion means (8) are also provided, connected to said actuation means (4) and operable for converting the mechanical energy produced by the rotation of said actuation means (4) in electric energy. The guide means (3, 5) are associated with said actuation means (4) so as to shape a path for the material (6) being unwound from said coil (2), able to keep said unwinding material (6) in contact with said actuation means (4) during every step of use of the device (1).

## Description

### Technical Field

The present invention concerns a device for recovering energy. In particular, it concerns a device suitable to be used in apparatuses for winding palletized loads with film of protective material.

### Background Art

It has been known that in order to perform the winding of palletized loads with protective material, for example extensible or macroperforated film, many types of apparatuses are used.

Known apparatuses, as for example the one disclosed in EP 1 291 282 (ILLINOIS TOOL WORKS INC.), essentially comprise a mobile structure, for example a trolley, suitable to support means for the distribution of the protective material, mobile along a substantially vertical direction.

The means for the distribution of the protective material comprise a coil supported rotatable about a substantially vertical axis, from which the material, of strip or film, to be wound around the load to be protected, is unwound. The coil is mounted slidable on guide means integral with a fixed element which extends in vertical direction from the base of the trolley, for example a column.

In practice, the trolley is displaced by hand so as to perform one or more rotations around the perimeter of the load to be wound, which is stationary. In this way, the material being unwound from the coil is wound around the load. It is possible to completely wound also loads of noticeable vertical extension, by gradually varying the vertical position of the coil.

The disclosed apparatus has been repeatedly modified in order to improve its performance and working efficiency.

For example, the trolley has been provided with an actuator, for example an electric engine, for easing the movement thereof around the load to be wound.

Moreover the vertical fixed column has been substituted by an articulated arm, controlled by an actuator with electronic control, able to handle the coil also along an horizontal axis. It has allowed to choose different automatic working programs, which suitably combine horizontal and vertical movements of the articulated arm, and which can be set by the user through a control interface. The automatic programs allow to easily adapt the winding to the kind of load to be wound, so as to optimize the consumption of material.

Known cited apparatuses allow to perform the winding of palletized loads through protective material, anyway they can be still improved.

In particular, high energetic wastes of the apparatus are complained, mainly because of the exigencies of the actuators which control the mechanical members for the distribution of the protective material.

Moreover, distribution means for the protective material are usually provided with braking means, required for adjusting the stretching stress of the material to be distributed in order to obtain a uniform and homogeneous distribution of the material on the surface to be covered. It has been observed that such braking devices dissipate high amounts of energy.

### Disclosure

The task of the present invention is that of solving the aforementioned problems, devising a device which allows to reduce the energetic consumption of the apparatuses of known type used for winding palletized loads through protective material.

Within such task, it is a further scope of the present invention that of providing an apparatus for winding palletized loads through protective material having a simple conception, a surely reliable structure, a versatile use as well as relative economic costs, and in particular characterized by reduced energetic consumptions with respect to the other apparatuses used in the considered field.

The cited scopes are attained, according to the present invention, by the device for recovering energy according to claim 1.

In particular, the device for recovering energy comprises a coil of film or strip material, supported rotatable on a substantially vertical axis A, means for guiding the material being unwound from said coil, freely rotatable on axes B, D parallel to said rotation axis A of said coil, actuation means rotatable on an axis C parallel to said rotation axis A of the coil, which can be operated for being driven in rotation by friction of the material being unwound from said coil. The invention comprises energy conversion means, connected to said actuation means, which can be operated for converting the mechanical energy produced by the rotation of said actuation means into electric energy. The guide means are associated with said actuation means so as to shape a path for the material being unwound from said coil, being able to keep said unwinding material in contact with said actuation means during each step of use of the device.

The energy conversion means are usefully connected to an accumulator, for example a battery, for stocking converted energy.

The device for recovering energy may equip an apparatus for the winding of palletized loads through protective material.

The battery may feed electric power to handle the moving parts of the apparatus for the winding of palletized loads through protective material, thus increasing the endurance of the apparatus, that is the working time between a full recharge of the battery and the following recharge. In practice, this is obtained by accumulating energy in a closed system for subsequent usage.

Electronic means can be arranged between the energy conversion means and the battery to optimize the energy transmission.

### Description of Drawings

Details of the invention shall be more apparent from the detailed description of a preferred embodiment of the device for recovering energy, illustrated for indicative purposes in the attached drawings, wherein:

figure 1 shows an axonometric view of the device for recovering energy;

figure 2 shows a plan schematic view of the device object of the invention;

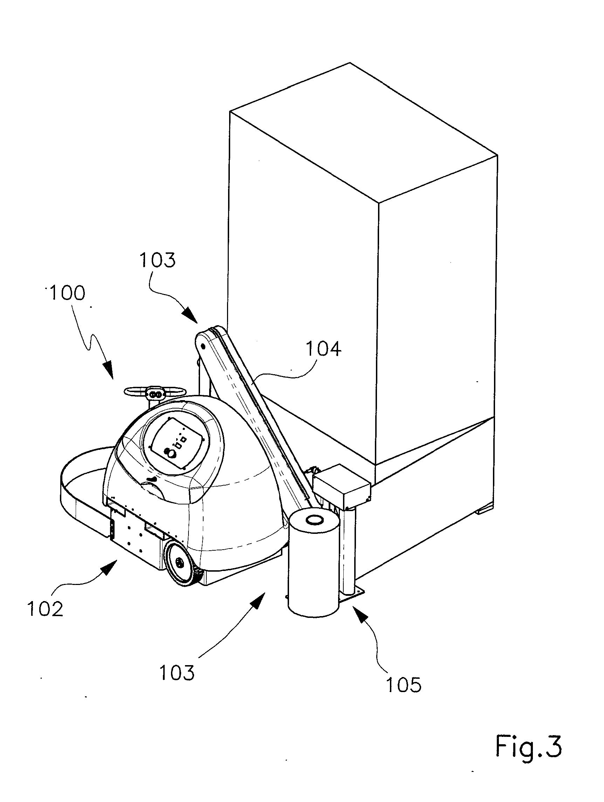

figure 3 shows an axonometric view of a machine for winding palletized loads, which comprises the device object of the invention.

### Best Mode

With particular reference to such figures, the device for recovering energy, provided in particular for use in apparatuses 100 for winding palletized loads with protective material such as extensible and macroperforated film, is indicated in its entirety with 1.

In particular the machine 100 comprises a base 102, for example a carriage mounted on wheels and suitably motorized, from which means 103 for the distribution of protective film extend. The distribution means 103 preferably comprise an articulated arm 104, which carries at its end a distribution head 105. The distribution head 105 is suitable to be handled through the articulated arm 104 at least along a substantially vertical working direction. Anyway, it is possible to provide that the distribution head 105 can be handled also along an horizontal plane, through the articulated arm 104. The articulate arm 104 is suitable to be handled by suitable actuators, upon electronic control. For this purpose, it is possible to provide the apparatus with a plurality of preset working programs, which set the sequence of movements of the articulated arm 104. Preset programs can be selected by an user through a command interface, according to the characteristics of the load to be covered.

The device for recovering energy 1, which is the main object of the present invention, is suitable to be mounted at the above mentioned distribution head 105.

The device 1 comprises a coil 2 of the above cited film or strip protective material, supported rotatable on an axis A substantially vertical. The coil is connected to the distribution head 105 through support means of known type.

Guide means 3, 5 are provided for the material 6 to be unwound from the coil 2, freely rotatable on axes parallel to said rotation axis A of said coil 2. Guide means 3,5 can be for example idle rolls.

The device 1 comprises actuation means 4, rotatable on an axis C parallel to said rotation axis A of the coil 2. Actuation means 4 can be operated for being dragged in rotation by friction of the material 6 being unwound from the coil 2.

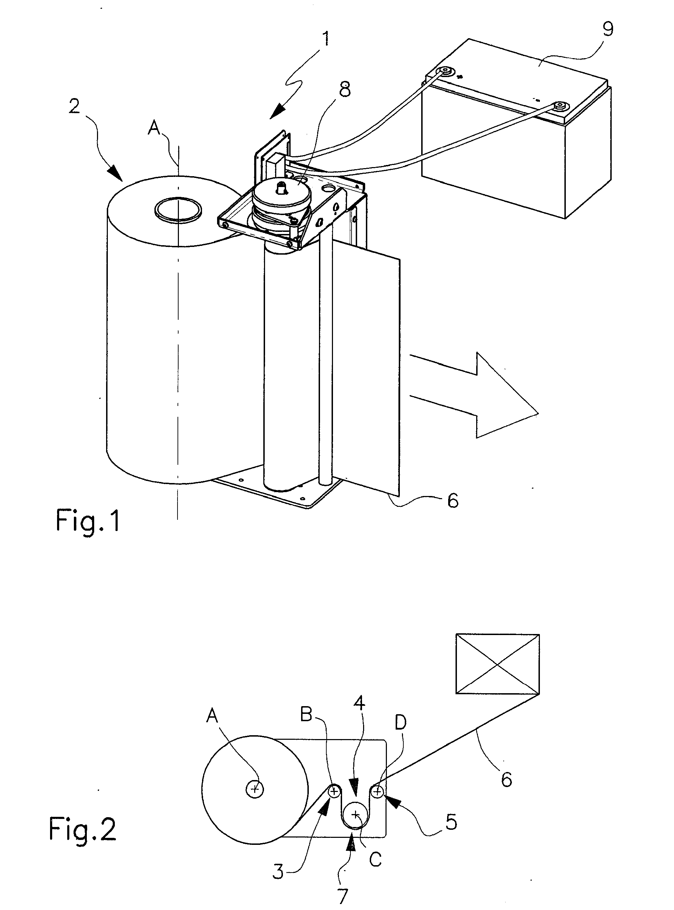

In particular, the guide means 3, 5 and the actuation means 4 together shape a path for the material 6 unwinding from the coil 2, having the purpose of keeping the unwinding material 6 in contact with the actuation means 4 during each step of use of the device 1 (see figure 2).

In a preferred embodiment of the invention, illustrated in the attached drawings, in particular first guide means 3 are provided, freely rotatable on an axis B parallel to the rotation axis A of the coil 2 and arranged upstream of the actuation means 4 along said path for the unwinding material, and second guide means 5 are provided freely rotatable on an axis D parallel to the rotation axis A of the coil 2, arranged downstream of said actuation means 4 along said path for the unwinding material 6.

The first guide means 3, the actuation means 4 and the second guide means 5 are respectively arranged so that the unwinding material 6 is guided along a path which shapes an elbow 7, at which end the actuation means 4 are arranged. As a consequence, the unwinding material is forced to keep in contact with the actuation means 4 during every working step of the device.

Obviously, it is possible to provide a different number and different arrangements for the above mentioned guide means, as long as the chosen configuration is able to provide the technical effect of keeping the unwinding material 6 always in contact with the actuation means 4.

The actuation means 4 preferably comprise a roll covered by a material which produces high friction, for example of the type of the rubber.

The actuation means 4 are associated with energy conversion means 8, which for example consist of an electromagnetic induction device of the dynamo-electric kind. The conversion means 8 can be operated for converting mechanical energy developed by the rotation of the said actuation means 4 in electric energy. The connection between actuation means 4 and conversion means 8 can be made in any known manner, for example through coaxial assemblage, or using means for the transmission of motion, for example gears.

In particular, energy conversion means 8 are associated with said actuation means 4 so that, when they are dragged in rotation, they cause a reaction on said actuation means 4, thus causing their controlled braking, so as to control the stress of said unwinding material 6, in order to obtain the uniform and homogeneous distribution of the same material 6 on the surface to be covered.

Energy conversion means 8 are usefully connected to an accumulator 9, for example a battery, for stocking converted energy.

The functioning of the device for recovering energy according to the invention is easy to understand by the previous description.

During the winding step of the load, the material 6 used for the winding is unwound from the coil 2, and is driven into the path shaped between the guide means 3, 5. Along such path, the material 6 comes in touch with the actuation means 4, which are consequently dragged in rotation by friction. Therefore, also the conversion means 8 are dragged in rotation, thus causing the conversion of mechanical energy produced by the movement of the material 6 into electric energy.

Therefore the device in object attains the scope of reducing the energetic consumption of the machines usually used in the technical field of the winding of palletized loads through protective film.

Such result is obtained essentially thanks to the inventive idea of recovering a part of mechanical energy inevitably produced by the motion of the material unwinding from the coil, converting it in electric energy through conversion means for example of dynamo-electric type.

In particular, it is to be observed that the conversion means 8, dragged in rotation, produce resistance thus acting as mechanical brake on the same actuation means 4. Such braking action, suitably customizable, allows to avoid the use of further braking mechanical devices, currently used in the background art. Such braking devices are usually employed for stretching the material unwinding from the coil, allowing its uniform and homogeneous distribution upon the surface to be covered. Such braking devices, in the background art, are not very efficient since they waste energy.

Therefore the invention allows to substitute known braking devices, recovering a great part of energy dispelled in the controlled braking of the distribution means of the unwinding material.

It is to point out that, according to an embodiment of the invention, the energy recovered from the controlled braking is stored in a battery 9 which feeds electric power to handle the moving parts of the apparatus for the winding of palletized loads through protective material. Therefore, such arrangement provides the effect of increasing the endurance of the apparatus, that is the working time between a full recharge of the battery and the following recharge. In practice, this is obtained by accumulating energy in a closed system for subsequent usage.

Electronic means can be arranged between the energy conversion means 8 and the battery 9 to optimize the energy transmission.

It is to be observed that, besides the invention is particularly suited for winding palletized loads through extensible or macroperforated film, it is possible as well to provide for its use also in case the winding is performed through strip or film materials of different kind.

The apparatus described for indicative purpose is susceptible of numerous modifications and variants according to the different exigencies.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Device (1) for recovering energy comprising
a coil (2) of film or strip material, supported rotatable on a substantially vertical axis (A), means (3, 5) for guiding the material (6) being unwound from said coil (2), freely rotatable on axis (B, D) parallel to said rotation axis (A) of said coil (2),
actuation means (4) rotatable on an axis (C) parallel to said rotation axis (A) of said coil (2), operable to be drawn in rotation by friction of the material (6) being unwound from the coil (2),
energy conversion means (8), connected to said actuation means (4) and operable to convert the mechanical energy developed by the rotation of said actuation means (4) into electric energy,
said guide means (3, 5) being associated with said actuation means (4) in such a way as to configure a path for the material (6) being unwound from said coil (2), able to maintain said material (6) being unwound in contact with said actuation means (4) during every step of the use of the device (1),
**characterized in that** it comprises a battery (9) connected to said energy conversion means (8) so as to store the energy converted by said energy conversion means (8).

2. Device according to claim 1, **characterized in that** said guide means (3, 5) comprise first means (3) for guiding the material being unwound from said coil (2), freely rotatable on an axis (B) parallel to said rotation axis (A) of said coil (2) and arranged upstream of said actuation means (4) along said path for the material being unwound from said coil (2), second means (5) for guiding the material being unwound from said coil (2), freely rotatable on an axis (D) parallel to said rotation axis (A) of said coil (2), arranged downstream of said actuation means (4) along said path for the material being unwound from said coil (2).

3. Device according to claim 1, **characterized in that** said path for the material (6) being unwound from said coil (2) shapes a sort of elbow at the end of which are arranged said actuation means (4).

4. Device according to claim 1, **characterized in that** said actuation means (4) comprise a roller coated with material which produces high friction.

5. Device according to claim 1, **characterized in that** said energy conversion means (8) comprise an electromagnetic induction device of the dynamoelectric type.

6. Device according to claim 1, **characterized in that** said material (6) being unwound from said coil (2) consists of extensible film or macroperforated film.

7. Device according to one of the previous claims, **characterized in that** said energy conversion means (8) are associated with said actuation means in such a way that, when they are drawn in rotation, they exert a reaction on said actuation means (4), obtaining the controlled braking thereof, in a way as to control the tension of said material (6) being unwound, in order to obtain the uniform and homogeneous distribution of the same material (6) on the surface to be covered.

8. Machine (100) for performing the winding of palletized loads by means of film of protective material, comprising
a mobile base (102), carrying means (103) for distributing said protective material, mobile at least along a substantially vertical working direction
**characterized in that**
said means (103) for distributing the protective material comprise a device (1) for recovering the energy according to any of the previous claims.

9. Machine according to claim 8, **characterized in that** said distribution means (103) are not provided with members specifically devoted to the controlled braking of the protective material being unwound, and said function of controlled braking of the protective material being unwound, aimed at controlling the tension thereof to enable the uniform and homogeneous distribution thereof on the surface to be covered, is performed solely by said energy conversion means (8) in cooperation with said actuation means (4).

10. Machine according to claim 8, **characterized in that** said mobile base (102) and said means (103) for distributing said protective material are electrically connected to said battery (9), and are electrically fed by said battery (9).
